# EUROPÄISCHE PATENTSCHRIFT

(11) **EP 2 881 347 B1**
(45) Veröffentlichungstag und Bekanntmachung des Hinweises auf die Patenterteilung: **01.11.2017**
(21) Anmeldenummer: 14192692.3
(22) Anmeldetag: 11.11.2014
(51) Int. Cl.: B65G 57/06, B65G 57/24

(54) **Palettiervorrichtung und Verfahren zu deren Handhabung**
Palletising device and method for handling it
Dispositif de palettisation et son procédé de fonctionnement

(30) Priorität: 03.12.2013 DE 102013224758
(43) Veröffentlichungstag der Anmeldung: 10.06.2015
(73) Patentinhaber: KRONES Aktiengesellschaft, 93073 Neutraubling (DE)
(72) Erfinder: Kollmuss, Manuel, 93073 Neutraubling (DE); Palumbo, Pino-Giuseppe, 93073 Neutraubling (DE)
(74) Vertreter: Benninger, Johannes

(56) Entgegenhaltungen:
- EP-A1- 2 537 783
- EP-A1- 2 610 197
- WO-A1-2013/135536
- DE-A1- 4 238 341
- IT-A1- MI 941 558
- US-A- 4 205 934

## Beschreibung

Die vorliegende Erfindung betrifft eine Palettiervorrichtung nach dem Oberbegriff des Anspruchs 1 mit vertikal beweglichen Transfer- und Beladestationen sowie ein Verfahren zur Handhabung einer solchen Palettiervorrichtung.

Zur Palettierung von Artikel-, Stückgut- oder Gebindegruppen oder -lagen durchlaufen die Artikel, Stückgüter oder Gebinde normalerweise zunächst eine Gruppierstation, in der die zunächst einreihig oder mehrreihig hintereinander transportierten Artikel zu palettierfähigen Lagen verschoben und/oder zusammengestellt werden. Diese palettierfähigen Lagen müssen an eine dafür geeignete Beladestation überführt werden, die in der Lage ist, Hubbewegungen durchzuführen. Die Beladestation legt diese Artikellagen dann an einem gewünschten Ort ab, bspw. an einem sog. Stapelplatz und einer darauf befindlichen Palette. Um die Artikel-, Stückgut- oder Gebindelagen oder -gruppen von einer Horizontalfördereinrichtung in passender Höhe an die Beladestation übergeben zu können, ist dieser meist eine sog. Transferstation vorgeordnet, von der aus die abzulegenden Lagen oder Gruppen einzeln an die Beladestation übergeben werden, die schließlich für die Palettierung sorgt.

Sowohl die Transferstation als auch die Beladestation umfassen jeweils Auflageflächen oder Auflageebenen, auf denen die gruppierten Artikel, Stückgüter und/oder Gebinde verschoben werden. Bei einer z.B. zweiteilig ausgebildeten Auflagefläche der Beladestation besteht die Auflagefläche aus zwei Tragböden oder sog. Beladeplatten, welche im Beladezustand geschlossen und anschließend während der Abgabe- oder Ablegephase zum Ablegen der Artikellage auf einem Stapelplatz oder einer Palette geöffnet werden. Dem Fachmann sind für solche Einsatzzwecke zahlreiche Varianten bekannt, so z.B. Jalousiegreiferköpfe oder ähnliches. Dabei verläuft ein solches Palettierverfahren mit einer aus dem Stand der Technik bekannten Palettiervorrichtung in einer Weise, dass zunächst Artikel mittels einer Gruppiereinrichtung zu einer palettierfähigen Lage zusammengestellt werden und im Anschluss daran von einem Bereitstellungsplatz bzw. einer Bereitstellungsstation oder einer sog. Transferstation in die Beladestation übergeben werden. Hierzu ist es notwendig, dass die Beladestation, wie z.B. ein an einem Hubwerk oder auch Roboter angeordneter Jalousiegreiferkopf, sich an den Bereitstellungsplatz oder die Transferstation anschließt, damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungs- oder Transferstation in die Beladestation übergeben wurde. Befindet sich die Artikellage vollständig in der Beladestation, so positioniert die Beladestation durch horizontale und/oder vertikale Bewegungen die Artikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

Aus der EP 1 908 709 A1 sind ein Verfahren und eine Vorrichtung zur Aufnahme und zum Umsetzen von Gebinden bekannt. Die Vorrichtung weist einen Tragboden für die Gebinde mit einer offenen Vorderseite zum Einbringen der Gebinde auf. Ein beweglicher Schieber dient dem Verlagern der Gebinde entlang einer horizontalen Aufnahmerichtung durch die offene Vorderseite.

Die EP 2 610 197 A1 offenbart weiterhin eine sehr kompakte Palettiervorrichtung nach dem Oberbegriff des Anspruchs 1, bei der an einer einzigen Hubwerkssäule eine vertikal bewegliche Transferstation und, dieser in Förderrichtung nachgeordnet, eine vertikal bewegliche Beladestation zur Beaufschlagung eines Stapelplatzes mit Artikellagen angeordnet sind. An einer oberen Stirnseite der Hubwerkssäule sind zwei Antriebsmotoren platziert, die mittels Zugriemen für die vertikalen Stellbewegungen der Transfer- und Beladestationen sorgen können. Die spielfreie vertikale Führung der beiden Stationen ist jeweils durch Führungsschlitten gebildet, die an einem frontseitigen Führungsschienenpaar der Hubwerkssäule auf und ab gleiten können. Da der Führungsschlitten der Transferstation unterhalb des Führungsschlittens der Beladestation angeordnet ist, kann die Beladestation nicht unterhalb des Höhenniveaus der Transferstation abgesenkt werden. Die offenbarte Palettiervorrichtung ist somit ausschließlich für eine Artikelversorgung mit unten liegendem Zulauf geeignet.

Durch IT MI 941558 A1 ist eine Palettiervorrichtung mit einer vertikal beweglichen Transferstation und mit einer der Transferstation in Förderrichtung nachgeordneten, vertikal beweglichen Beladestation bekannt, die mit einem Stapelplatz zur Palettierung der Artikel, Stückgüter und/oder Gebinde in Förderverbindung steht und/oder dem Stapelplatz räumlich zugeordnet ist. Die nebeneinander angeordneten und unabhängig voneinander in ihren vertikalen Positionen verstellbaren Transfer- und Beladestationen sind einer gemeinsamen, ortsfesten Tragstruktur zugeordnet, die jeweils separate Führungseinrichtungen zur vertikal beweglichen Führung und Antriebseinrichtungen zur vertikalen Positionsverstellung der Transfer- und Beladestationen aufweist.

Durch US 4,205,934 ist ebenfalls eine Palettiervorrichtung mit einer vertikal beweglichen Transferstation und mit einer der Transferstation in Förderrichtung nachgeordneten, vertikal beweglichen Beladestation bekannt, die mit einem Stapelplatz zur Palettierung der Artikel, Stückgüter und/oder Gebinde in Förderverbindung steht und/oder dem Stapelplatz räumlich zugeordnet ist. Die nebeneinander angeordneten und unabhängig voneinander in ihren vertikalen Positionen verstellbaren Transfer- und Beladestationen sind einer gemeinsamen, ortsfesten Tragstruktur zugeordnet, die jeweils separate Führungseinrichtungen zur vertikal beweglichen Führung und Antriebseinrichtungen zur vertikalen Positionsverstellung der Transfer- und Beladestationen aufweist.

Durch EP 2 610 197 A1 ist eine an einer vertikalen Hubsäule beweglich angeordnete Beladestation bekannt, der eine ebenfalls an der Hubsäule unabhängig von der Beladestation vertikal bewegliche Transferstation vorgeordnet ist. Die Beladestation und die Transferstation nutzen gemeinsam die selben Führungseinrichtungen.

Durch EP 2 537 783 A1 ist ein Hubwerk bekannt, welches Artikel auf einem ersten Höhenniveau übernimmt und auf einem zweiten Höhenniveau weitergibt. Hierzu weist das Hubwerk eine kammartige Tragfläche auf, mit dem es auf dem ersten Höhenniveau unter den auf einem ebenfalls kammförmigen Übergabefläche aufstehenden Artikeln auftaucht und bis auf das zweite Höhenniveau mit anhebt, auf dem erneut eine kammartige Übernahmefläche von unten zwischen der Tragfläche auftaucht und die Artikel von der wieder abtauchenden Tragfläche übernimmt. Die Tragfläche und die Übernahmefläche sind an getrennten Hubsäulen einer gemeinsamen, ortsfesten Tragstruktur geführt. Das zweite Höhenniveau kann durch eine Beladestation gebildet sein und das erste Höhenniveau durch eine Horizontalfördereinrichtung.

DE 42 383 41 A1 offenbart eine zwischen einer Beladestation und einer Zuführungsfördereinrichtung angeordnete Transferstation. Diese besteht aus einem Paternoster mit umlaufenden Transferflächen. Die Der Umlauf der Transferflächen des Paternosters sieht vor, dass die Transferflächen auf der der Zuführungsfördereinrichtung zugewandten Seite des Paternosters aufsteigen und auf der der Beladestation zugewandten Seite des Paternosters absteigen. Der Zuführungsfördereinrichtung und der Beladestation sind in den Paternoster eingreifende, jeweils auf dem Niveau der Zuführungsfördereinrichtung und der Beladestation angeordnete Übergabeflächen zugeordnet. Die Beladestation ist gemeinsam mit der ihr zugeordneten Übergabefläche vertikal beweglich. Die Transferflächen und die Übergabeflächen sind durch korrespondierende, kammförmige Roste gebildet. Die kammförmigen Roste der Transferflächen und die Übergabeflächen korrespondieren dabei derart miteinander, dass die auf der der Zuführungsfördereinrichtung zugewandten Seite des Paternosters aufsteigenden Transferflächen von unten kommend durch die der Zuführungsfördereinrichtung zugeordnete Übergabefläche hindurch auftauchen und von oben kommend durch die der Beladestation zugeordnete Übergabefläche hindurch wieder abtauchen. Dabei werden Artikel oder Artikellagen von den auftauchenden Transferflächen des Paternosters von der der Zuführungsfördereinrichtung zugeordneten Übergabefläche abgehoben und durch die abtauchenden Transferflächen wieder auf die der Beladestation zugeordneten Übergabefläche abgestellt.

Ein vorrangiges Ziel der vorliegenden Erfindung besteht darin, eine möglichst kompakte Palettiervorrichtung zur Verfügung zu stellen, die gegenüber den bekannten Palettiervorrichtungen erhöhte Bewegungsfreiheitsgrade und damit universellere und breitere Anwendbarkeiten und Einsatzmöglichkeiten für unterschiedliche Einsatz- und Fördersituationen besitzt. Ein weiteres Ziel der Erfindung besteht darin, bei der Handhabung einer solchen Palettiervorrichtung die Palettiergeschwindigkeiten erhöhen zu können. Insbesondere soll es das Verfahren ermöglichen, die Zeiten zwischen dem Ablegen einer Artikellage und der Aufnahme einer weiteren Artikellage minimieren zu können.

Zur Erreichung des zuerst genannten Ziels schlägt die Erfindung eine Palettiervorrichtung mit den Merkmalen des unabhängigen Anspruchs 1 vor, die zumindest eine vertikal bewegliche Transferstation sowie eine vertikal bewegliche Beladestation umfasst. Merkmale vorteilhafter Weiterbildungen der Erfindung finden sich in den abhängigen Ansprüchen. Die vertikal bewegliche Transferstation der erfindungsgemäßen Palettiervorrichtung steht mit einer vorgeordneten Zufördereinrichtung zur Beförderung von zu palettierenden Artikeln, Stückgütern, Gebinden o. dgl. in Förderverbindung. Diese Zufördereinrichtung kann insbesondere eine Horizontalfördereinrichtung wie bspw. ein Mattenkettenförderer o. dgl. sein, der eine Vielzahl von Artikeln, Gebinden o. dgl. Stückgüter zur Transferstation befördert und an diese übergibt. Die Transferstation weist eine Auflageebene definierter Größe für eine bestimmte Anzahl von Artikeln, Gebinden oder Stückgütern auf, die normalerweise bereits in räumliche Anordnungen gebracht sind, die mittels der nachgeordneten Beladestation palettiert und aufeinander gestapelt werden können. Weiterhin umfasst die erfindungsgemäße Palettiervorrichtung eine der Transferstation in Förderrichtung nachgeordnete, ebenso vertikal bewegliche Beladestation, die mit einem Stapelplatz zur Palettierung der Artikel, Stückgüter und/oder Gebinde in Förderverbindung steht.

Gemäß der Erfindung sind die unabhängig voneinander in ihren vertikalen Positionen verstellbaren Transfer- und Beladestationen einer gemeinsamen Tragstruktur zugeordnet. Diese gemeinsame Tragstruktur dient einerseits als Aufhängung und Stützlager für die vertikal verstellbaren Transfer- und Beladestationen und weist andererseits geeignete Führungseinrichtungen auf, um diese vertikale Verstellbarkeit mit der gewünschten Geschwindigkeit und Präzision zu ermöglichen. Zu diesem Zweck sind separate Führungseinrichtungen, bspw. in Gestalt von vertikal entlang der Stütz- oder Tragstruktur verankerten Führungs- oder Leitschienen o. dgl. zur vertikal beweglichen Führung der Transfer- und Beladestationen vorgesehen. Diese separaten Führungseinrichtungen bzw. die separaten Führungs- oder Leitschienen sind räumlich und funktional voneinander getrennt, um die getrennte Höhenverstellbarkeit der Transferstation und der Beladestation unter allen Betriebsbedingungen gewährleisten zu können. Darüber hinaus sind der Stütz- oder Tragstruktur separate Antriebseinrichtungen zur vertikalen Positionsverstellung der Transfer- und Beladestationen zugeordnet, bspw. in Gestalt von separaten Antriebsmotoren, die bspw. über geeignete Zugmittel die exakt steuerbare Höhenverstellbarkeit der Transfer- und Beladestationen gewährleisten zu können.

Bei der erfindungsgemäßen Palettiervorrichtung mit ihrer vertikal beweglichen Transferstation und mit ihrer der Transferstation in Förderrichtung nachgeordneten, ebenfalls vertikal beweglichen Beladestation ist vorgesehen, dass die beiden vertikal beweglichen Stationen mit ihren Auflageebenen für die zu transportierenden und zu palettierenden Artikel, Behälter oder Stückgüter zwar unmittelbar nebeneinander angeordnet sind und damit in einer variabel nutzbaren Förderverbindung miteinander stehen, aber dennoch unabhängig voneinander in ihren vertikalen Positionen verstellbar sind. Dies wird erfindungsgemäß dadurch erreicht, dass die beiden Stationen, die Transfer- und die Beladestation, einer gemeinsamen, ortsfest verankerten und typischerweise nicht um ihre Achse drehbaren Tragstruktur zugeordnet sind. An dieser Tragstruktur, die durch eine Säule mit im Wesentlichen vertikaler Längserstreckung insbesondere durch eine Hubwerkssäule gebildet wird, sind jeweils separate Führungseinrichtungen zur vertikal beweglichen Führung sowie auch separate Antriebseinrichtungen zur vertikalen Positionsverstellung der Transfer- und Beladestationen angeordnet. Außerdem sind diese an der Tragstruktur oder der Hubwerkssäule verankerten bzw. dort integrierten Führungseinrichtungen vorzugsweise jeweils an gegenüberliegenden Seiten der Tragstruktur angeordnet, was bspw. durch jeweils an gegenüberliegenden Vertikallängsseiten der Tragstruktur befindliche Vertikalführungen und/oder Führungseinrichtungen für die Vertikalbewegungen der Transfer- und Beladestationen realisiert sein kann.

Da bei der erfindungsgemäßen Palettiervorrichtung den nebeneinander angeordneten Transfer- und Beladestationen vorzugsweise jeweils gegenüberliegend an der Tragstruktur angeordnete Vertikalführungen und/oder Führungseinrichtungen für die Vertikalbewegungen der Transfer- und Beladestationen zugeordnet sind, können sich diese weitgehend unabhängig voneinander nach oben oder unten bewegen, sinnvollerweise im Zusammenhang mit der entsprechenden Beförderung der Artikel, Stückgüter oder Gebinde in Richtung zum Stapelplatz. So kann die Transferstation in ihren Hebe- oder Senkbewegungen oberhalb oder unterhalb des Höhenniveaus der zumindest temporär stillstehenden oder sich vertikal bewegenden Beladestation positioniert werden. Gleichermaßen kann auch die Beladestation in ihren Hebe- oder Senkbewegungen oberhalb oder unterhalb des Höhenniveaus der zumindest temporär stillstehenden oder sich vertikal bewegenden Transferstation positioniert werden. D.h., die beiden Stationen, die in Förder- bzw. Materialflussrichtung der in Richtung zum Stapelplatz beförderten Artikel, Stückgüter und/oder Gebinde hintereinander und/oder in Reihe angeordnet sind, können sich je nach Bedarf gegenseitig überholen, sind also in ihren Vertikalbewegungen unabhängig voneinander steuerbar, was nicht zuletzt durch die separaten Vertikalführungen und die separat ausgeführten und/oder steuerbaren Antriebsmotoren ermöglicht ist.

Die Trag- oder Stützstruktur der erfindungsgemäßen Palettiervorrichtung ist durch eine säulenartige Struktur, insbesondere durch eine Hubwerkssäule gebildet, die sich im Wesentlichen in vertikale Richtung erstreckt und die mit ihrer unteren Stirnseite am Boden der Produktionsstätte verankert ist. An dieser Hubwerkssäule können die erwähnten Transfer- und Beladestationen vertikal beweglich angeordnet sein, wobei sie in einer Weise unabhängig voneinander beweglich sind, dass es weder zu einer Kollision der Transfer- und Beladestationen kommen kann, noch dass deren Vertikalbewegungen in irgendeiner Weise voneinander abhängig sind, außer die für einen Überladevorgang von Artikeln, Stückgütern oder Gebinden erforderliche Niveaugleichheit der Auflageebenen der beiden Stationen. Um die vertikale Beweglichkeit der Transfer- und Beladestationen zu ermöglichen, können diese jeweils mit separaten Antriebsmotoren ausgestattet sein, die bspw. an einer Oberseite der Tragstruktur oder Hubwerkssäule angeordnet sein können. Sowohl die Transferstation als auch die Beladestation können mit ihren jeweiligen Antriebsmotoren bspw. über geeignete Zugmittel verbunden sein, so dass sie mittels der Zugmittel - dies können bspw. Zugriemen, Zugketten, Zugseile o. dgl. sein - gegen die Wirkung der Schwerkraft nach oben gezogen bzw. nach unten abgelassen werden können.

Um die erforderlichen Antriebsleistungen zur vertikalen Bewegung der Transfer- und Beladestationen zu reduzieren, können die Stationen jeweils mit Gegengewichten gekoppelt sein, die sich jeweils in gegensinniger Vertikalbewegung zu den sich aufwärts oder abwärts bewegenden Belade- bzw. Transferstationen senken oder heben können. Auch diese Gegengewichte können wahlweise über entsprechende Zugmittel wie bspw. Zugriemen, Zugketten oder Zugseile mit den Antriebsmotoren bzw. mit den Belade- oder Transferstationen verbunden sein. Wahlweise kann der vertikale Antrieb, d.h. der Antrieb der Hebe- und Senkbewegungen der Belade- und Transferstationen auch mittels geeigneter Linearmotoren wie bspw. hydraulischer Antriebe, mittels elektrischer Zahnstangenantriebe o. dgl. erfolgen. Auch bei einer solchen Variante sind jeweils separate Antriebe sowohl für die Beladestation als auch für die Transferstation erforderlich.

Was im vorliegenden Zusammenhang als Führungseinrichtungen der erfindungsgemäßen Palettiervorrichtung bezeichnet wird, sind jeweils Verbindungselemente zwischen der Beladestation sowie der Transferstation einerseits und der Stützstruktur bzw. der Hubwerkssäule andererseits. Diese Verbindungselemente ermöglichen die vertikalen Bewegungen der beiden vertikal verstellbaren Belade- und Transferstationen und sorgen zudem für eine Begrenzung der Bewegungsmöglichkeiten innerhalb eines vorgegebenen Bewegungsraumes. Diese Verbindungselemente bzw. Führungseinrichtungen können bspw. jeweils durch wälz- und/oder gleitgelagerte Vertikalführungselemente gebildet sein, die an vertikal entlang der bzw. parallel zur Längserstreckungsrichtung der Hubwerkssäule verlaufenden Führungsschienen und/oder -flächen an gegenüber liegenden Längsseiten der Tragstruktur bzw. Hubwerkssäule geführt sind. Dadurch, dass diese wenigstens zwei Vertikalführungselemente die vertikale Verstellbarkeit unabhängig voneinander ermöglichen, liefern sie die erfindungsgemäße funktionale und räumliche Trennung der Belade- und Transferstationen. Die Vertikalführungselemente benötigen mindestens eine Lagerung und Führung an zwei oder drei voneinander entfernten Stellen, wobei im Wesentlichen sichergestellt sein muss, dass die Führungen räumlich bestimmt sind und keine undefinierten Bewegungen der Transfer- oder Beladestationen zulassen. Die Führungen können jeweils mit geeigneten Wälzkörpern ausgestattet sein, wahlweise auch mit Gleitführungen. Vorzugsweise umfassen die Vertikalführungselemente jeweils mindestens drei Gleit- und/oder Wälzlagerführungen, die eine parallel zur vertikalen Längserstreckungsrichtung der Tragstruktur bzw. Hubwerkssäule verlaufende Führungsschiene zumindest von zwei Seiten umgreifen, so dass eine eindeutige Festlegung der Bewegungsfreiheitsgrade mit ausschließlich vertikaler Bewegungsmöglichkeit der Führungselemente definiert ist.

Während die Vertikalführungselemente, an denen jeweils die Belade- bzw. Transferstationen fixiert sind, jeweils vorzugsweise an gegenüber liegenden vertikalen Seitenflächen der Tragstruktur bzw. Hubwerkssäule angeordnet sind, ragen die Auflageflächen der Belade- und Transferstation vorzugsweise jeweils nach vorne, im Bereich einer Vorderseite der Tragstruktur bzw. Hubwerkssäule, so dass die Auflageflächen der vertikal verstellbaren Belade- und Transferstationen bei randseitig an einem Förderpfad stehender Hubwerkssäule jeweils einen Teil des Förderabschnittes zur Beförderung der Artikel, Stückgüter oder Gebindelagen bilden können, wenn diese in kompletten Lagen palettiert werden. Wie erwähnt, sind die Transfer- und die Beladestation in Förderrichtung so nebeneinander angeordnet, dass sie in Förderrichtung nacheinander mit Artikeln, Stückgütern oder Gebinden beaufschlagt werden, die schließlich mittels der Beladestation auf dem Stapelplatz abgelegt und palettiert werden können.

Die vertikal verstellbare Transferstation kann wahlweise eine geeignete Überschubeinrichtung aufweisen, um die dort befindliche, zu palettierende Lage mit Artikeln, Stückgütern oder Gebinden in horizontaler Richtung auf die in gleicher Ebene befindliche Beladestation überschieben zu können. Vorzugsweise jedoch ist die Auflageebene der Transferstation mit einer Horizontalfördereinrichtung ausgestattet, die z.B. durch ein umlaufendes Band, eine Mattenkette o. dgl. gebildet sein kann, d.h. durch ein umlaufendes Fördermittel, das für einen schnellen und erschütterungsfreien Transport der zu palettierenden Lage zum nachgeordneten Fördermittel bzw. zur Beladestation sorgen kann. Die Beladestation kann weiterhin mit Rollböden, mit einer zweigeteilten Bodenfläche o. dgl. ausgestattet sein, wobei die der Transferstation zugewandte Seite der Bodenfläche vorzugsweise nach unten gefahren werden kann, so dass sie die Überführungsbewegung der Lage nicht behindern kann. Die Beladestation kann bspw. als sog. Jalousiekopf, Jalousiegreiferkopf o. dgl. ausgebildet sein, der eine zweigeteilte Bodenfläche mit rotierenden Auflagestäben aufweist. Zudem liefert die Bewegungsmöglichkeit der wenigstens zweigeteilten Bodenfläche den Vorteil, dass bereits mit dem Schließen der Jalousie eine Gebindelage von der Transferstation in die Beladestation übergeben werden kann.

Auf diese Weise kann der Überschubvorgang optimiert werden, indem die von der Transferstation auf die Beladestation überführten Lagen aus Gebinden, Stückgütern, Artikeln oder Behältern bereits während eines Schließvorganges der zwei- oder mehrteiligen Bodenfläche der Beladestation überschoben werden können. Zu diesem Zweck kann bspw. ein jalousieartiger Abschnitt der zwei- oder mehrteiligen Bodenfläche der Beladestation, welcher der Transferstation zugewandt ist, unter die Auflageebene befördert werden, während ein weiterer jalousieartiger Abschnitt der zwei- oder mehrteiligen Bodenfläche der Beladestation, welcher der Transferstation in Förderrichtung abgewandt ist, auf ein höheres Niveau, d.h. über die Auflageebene befördert werden kann. Auf diese Weise kann bereits während eines Schließvorganges der Auflagejalousie der Beladestation mit dem nächsten Überschubvorgang begonnen werden.

Der weite und flexible vertikale Verstellbereich der Transferstation, die unabhängig von der Beladestation in der Höhe verstellt werden kann, ermöglicht unterschiedliche Anordnungen der Zufördereinrichtung, die je nach Maschinenumgebung einen sog. unteren Zulauf oder einen sog. oberen Zulauf aufweisen kann. Mit oberem und unterem Zulauf sind unterschiedliche Höhenniveaus von Horizontalfördereinrichtungen zur Zuförderung von Artikeln, Gebinden oder Stückgütern gemeint, die bspw. oberhalb einer tiefsten Vertikalposition der Transferstation angeordnet sein kann. Bei einem unteren Zulauf befinden sich normalerweise die untere Vertikalposition der Transferstation und das Förderniveau der Zufördereinrichtung auf einem einheitlichen Höhenniveau.

Ein wesentlicher Vorteil liegt bei der erfindungsgemäßen Palettiervorrichtung darin, dass trotz Verwendung einer einzigen gemeinsamen Tragstruktur in Form einer Säule mit im Wesentlichen vertikaler Längserstreckung - dies kann insbesondere eine vertikale Hubwerkssäule o. dgl. sein - und trotz einer Anordnung der Transferstation und der Beladestation in unmittelbarer Nähe nebeneinander eine völlig unabhängige Vertikalbewegung der beiden Stationen ermöglicht ist. Diese unabhängigen Bewegungsmöglichkeiten werden im Wesentlichen dadurch erreicht, dass die Führungselemente für die vertikale Bewegungsführung der beiden Stationen jeweils separat und damit sowohl funktional als auch baulich getrennt voneinander ausgeführt sind. Die Führungselemente können zwar an gegenüberliegenden Längsseiten derselben Hubwerkssäule und damit in unmittelbarer baulicher Nähe zueinander angeordnet sein, bleiben aber dennoch baulich getrennt sowie auch in ihren Bewegungsführungen und auch antriebsseitig getrennt voneinander.

Weiterhin umfasst die vorliegende Erfindung zur Erreichung des oben genannten weiteren Ziels ein Verfahren nach Anspruch 10 zur Handhabung einer Palettiervorrichtung gemäß einer der zuvor beschriebenen Ausführungsvarianten. Wie erwähnt, umfasst die Palettiervorrichtung eine vertikal bewegliche Transferstation sowie eine nachgeordnete und unabhängig von dieser vertikal bewegliche Beladestation, wobei die Transferstation mit einer vorgeordneten Zufördereinrichtung zur Beförderung von zu palettierenden Artikeln, Stückgütern, Gebinden o. dgl. in Förderverbindung steht, während die Beladestation mit einem Stapelplatz zur Palettierung der Artikel, Stückgüter und/oder Gebinde in Förderverbindung steht. Bei dem Verfahren ist vorgesehen, dass die Auflageebenen der Transfer- und Beladestationen zumindest während eines Überschubs einer Artikel-, Stückgut- und/oder Gebindelage zwischen den beiden Stationen annähernd miteinander fluchten. Außerdem kann vorgesehen sein, dass die Transfer- und Beladestationen zumindest während einer Phase eines Überschubs einer Artikel-, Stückgut- und/oder Gebindelage zwischen den beiden Stationen jeweils synchrone Vertikalbewegungen ausführen, was einen Überschubvorgang deutlich beschleunigen kann, da bereits nach einer Übernahme einer vollständigen Artikel-, Stückgut- und/oder Gebindelage von der Horizontalfördereinrichtung auf die Transferstation mit einer gleichsinnigen Hubbewegung der beiden Stationen begonnen werden kann, und zwar auch während eines Überschubvorganges von der Transfer- auf die Beladestation. Dadurch kann ein anzufahrendes Höhenniveau zur passgenauen Erreichung des Stapelplatzes und zur Ablage der Artikel-, Stückgut- und/oder Gebindelage schneller erreicht werden, was den Palettierungsvorgang insgesamt beschleunigen kann.

Der Überschubvorgang ist zudem dadurch optimiert, dass die von der Transferstation auf die Beladestation überführten Lagen aus Gebinden, Stückgütern, Artikeln oder Behältern bereits während eines Schließvorganges der zwei- oder mehrteiligen Bodenfläche der Beladestation überschoben werden, was durch die zwei- oder mehrteilige Ausbildung der eine ungefähr mittige Trennkante aufweisenden Auflagejalousie gewährleistet ist. Außerdem kann dieser Überschubvorgang - wahlweise bei gleichzeitiger Jalousiebewegung - während einer ungefähr synchronen Auf- oder Abwärtsbewegung der jeweils synchron an der Hubwerkssäule aufwärts oder abwärts bewegten Transfer- und Beladestationen erfolgen.

Nachfolgend finden sich in zusammengefasster Form wesentliche der bereits genannten sowie einige zusätzliche Aspekte der vorliegenden Erfindung. So sieht die erfindungsgemäße Palettiervorrichtung eine einzige Hubwerkssäule vor, bei der die Transferstation und die Beladestation in räumlicher Hinsicht an derselben Seite platziert sind, wobei jedoch der Antrieb beider Stationen an der Säule gegenüberliegend angeordnet ist. Somit sind die Umlenkachsen für die Zugmittel für die Vertikalbewegungen der einzelnen Stationen jeweils orthogonal zum Transportfluss der Gebindelagen von der Transferstation in die Beladestation. Bedingt durch diesen Aufbau und die Anordnung der Antriebe ist es möglich, den Palettierer flexibel sowohl für einen sog. oberen Gebindelagenzulauf als auch für einen sog. unteren Gebindelagenzulauf zu verwenden. Diese Konfiguration wird auch dadurch ermöglicht, dass die Transferstation und die Beladestation sich gegenseitig in ihrer Höhenposition vertikal überholen können. Hierfür werden die Transferstation und die Beladestation jeweils über eigene Antriebe, Zugmittel und Gegengewichte angesteuert bzw. betrieben. Die Übergabe einer Artikellage von der Transfer- zur Beladestation kann bedarfs- und vorteilhafterweise auch während gleichsinniger und synchronisierter Hubwerksbewegungen stattfinden. Bevorzugt umfasst die Transferstation ein umlaufendes Fördermittel, während die Beladestation vorzugsweise eine zweigeteilte Bodenfläche, z.B. eine Jalousie o. dgl. aufweist. Dabei ist zu berücksichtigen, dass die Jalousiehälfte, welche räumlich der Transferstation zugeordnet bzw. zugewandt ist, nach unten weggerollt wird. Dies hat den Vorteil, dass bereits mit dem Schließen der Jalousie eine Gebindelage von der Transferstation in die Beladestation übergeben werden kann. Die Lagerung und Führung der Transferstation oder der Beladestation kann wahlweise jeweils eine sog. Dreipunktlagerung sein.

Mittels dieses Aufbaus ist es möglich, dass sich Beladestation und Transferstation trotz Anordnung an einer Hubwerkssäule vertikal in ihren Bewegungen überlagern können, was einen wesentlichen Fortschritt gegenüber bisher bekannten Palettiervorrichtungen bedeutet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 a zeigt eine schematische Perspektivansicht einer Ausführungsvariante einer erfindungsgemäßen Palettiervorrichtung, die eine Hubwerkssäule mit daran vertikal beweglicher Transferstation und Beladestation umfasst.
Fig. 1b zeigt eine weitere schematische Perspektivansicht zur Verdeutlichung von Führungselementen zur vertikalen Verschiebbarkeit der Transfer- und Beladestationen entlang einer Längserstreckungsrichtung der Hubwerkssäule.
Fig. 1c zeigt eine schematische Seitenansicht der Palettiervorrichtung gemäß Fig. 1a.
Fig. 1d zeigt eine schematische Draufsicht der Palettiervorrichtung gemäß Fig. 1a.
Fig. 2a zeigt eine erste Ausführungsvariante der erfindungsgemäßen Palettiervorrichtung mit einem unten liegenden Zulauf für zu palettierende Artikel, Stückgüter und/oder Gebinde.
Fig. 2b zeigt eine zweite Ausführungsvariante der erfindungsgemäßen Palettiervorrichtung mit einem oben liegenden Zulauf für zu palettierende Artikel, Stückgüter und/oder Gebinde.

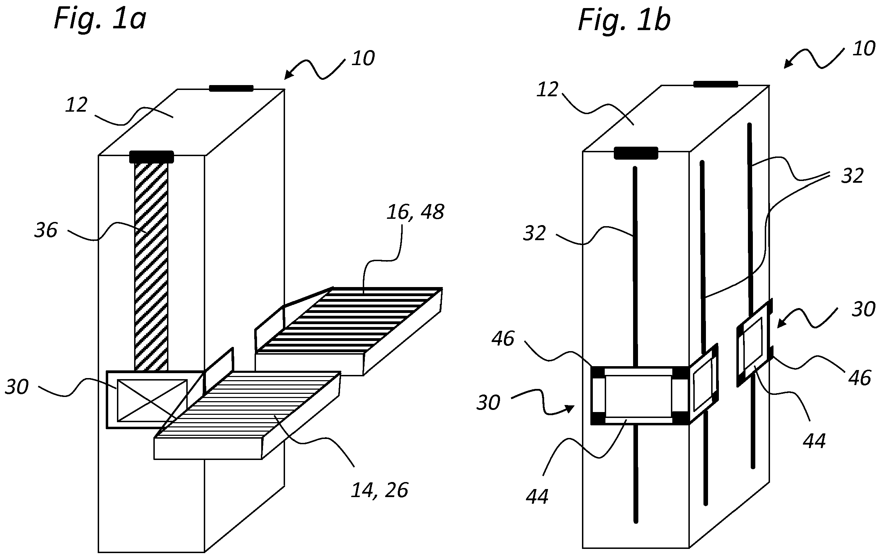

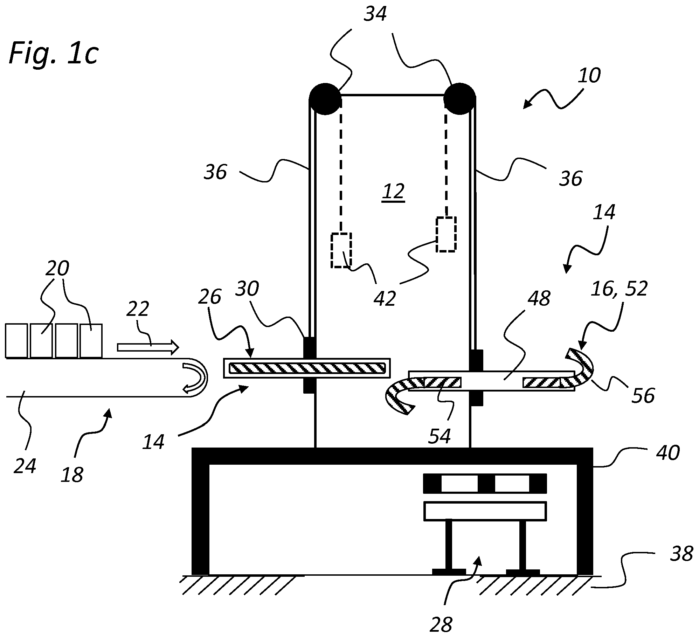

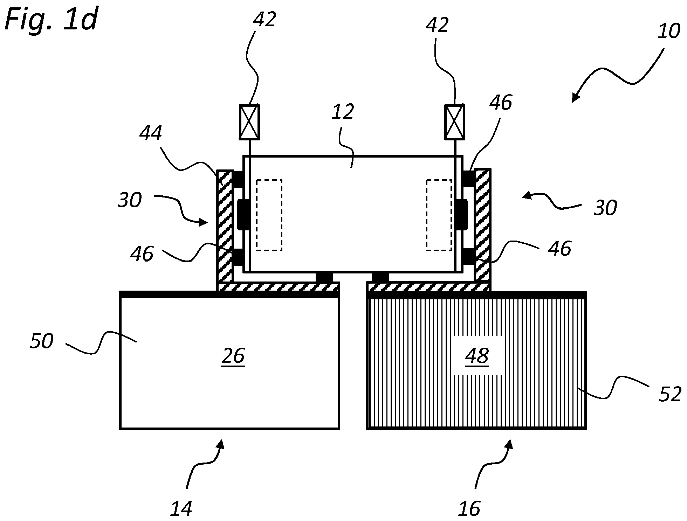

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Der begrenzte Schutzumfang wird durch die Ansprüche definiert. Die insgesamt vier schematischen Ansichten der Fig. 1 zeigen Ausführungsvarianten einer erfindungsgemäßen Palettiervorrichtung 10, die eine Hubwerkssäule 12 mit daran vertikal beweglicher Transferstation 14 und Beladestation 16 umfasst. So zeigt die Fig. 1 a eine schematische Perspektivansicht der Palettiervorrichtung 10, während in der Fig. 1b Führungselemente zur vertikalen Verschiebbarkeit der Transfer- und Beladestationen 14, 16 entlang einer Längserstreckungsrichtung der Hubwerkssäule 12 verdeutlicht sind. Die Fig. 1c zeigt eine schematische Seitenansicht und Fig. 1d eine Draufsicht der Palettiervorrichtung 10.

Wie es insbesondere die Figuren 1 a und 1c erkennen lassen, sind an der vertikal ausgerichteten Hubwerkssäule 12 der Palettiervorrichtung 10 die vertikal bewegliche Transferstation 14 sowie die ebenfalls vertikal bewegliche Beladestation 16 angeordnet. Der vertikal beweglichen Transferstation 14 ist eine Zufördereinrichtung 18 zur horizontalen Beförderung von zu palettierenden Gebinden 20 vorgeordnet (vgl. Fig. 1c), die in Förderrichtung 22 zur Transferstation 14 befördert und jeweils in Lagenformation an diese übergeben werden. Die gezeigte Zufördereinrichtung 18 kann insbesondere eine geeignete Horizontalfördereinrichtung 24 wie bspw. ein Mattenkettenförderer o. dgl. sein, der eine Vielzahl von Gebinden 20 zur Palettiervorrichtung 10 bzw. zu deren Transferstation 14 befördert und an diese übergibt.

Wenn im vorliegenden Zusammenhang generell von Gebinden 20 die Rede ist, so ist dies beispielhaft zu verstehen. Grundsätzlich eignet sich die Palettiervorrichtung 10 zur Palettierung unterschiedlichster Artikel, Stückgüter oder Verpackungsgüter. Der Einfachheit halber wird im folgenden Zusammenhang durchgängig die Bezeichnung Gebinde 20 verwendet, was aber die Eignung für andere Artikel oder Stückgüter nicht ausschließt.

Wie es insbesondere die Figuren 1a, 1c und 1d erkennen lassen, weist die Transferstation 14 eine erste Auflageebene 26 definierter Größe für eine bestimmte Anzahl von Gebinden 20 auf, die normalerweise bereits in räumliche Anordnungen gebracht sind, die mittels der nachgeordneten Beladestation 16 palettiert und aufeinander gestapelt werden können, ggf. in mehreren Lagen übereinander. Der Transferstation 14 ist in Förderrichtung 22 die vertikal bewegliche Beladestation 16 nachgeordnet, die mit einem Stapelplatz 28 (Fig. 1c) zur Palettierung der Gebinde 20 in Förderverbindung steht.

Die unabhängig voneinander in ihren vertikalen Positionen verstellbaren Transfer- und Beladestationen 14 und 16 sind einer gemeinsamen Tragstruktur zugeordnet, die im gezeigten Ausführungsbeispiel durch die Hubwerkssäule 12 gebildet ist. Die gemeinsame Tragstruktur der Hubwerkssäule 12 dient als Aufhängung und Stützlager für die vertikal verstellbaren Transfer- und Beladestationen 14, 16 und weist zu diesem Zweck vertikal bewegliche Führungseinrichtungen 30 auf (vgl. Fig. 1b), welche für die vertikale Verstellbarkeit mit der gewünschten Geschwindigkeit und Spielfreiheit sorgen. Die separaten Führungseinrichtungen 30, an denen jeweils die Beladestation 16 bzw. die Transferstation 14 verankert sind, ermöglichen eine vertikale Verschiebbarkeit mittels entlang der Stütz- oder Tragstruktur der Hubwerkssäule 12 verlaufender Führungsschienen 32 (Fig. 1b). Diese separaten Führungseinrichtungen 30 sowie die separaten Führungsschienen 32 sind jeweils räumlich und funktional voneinander getrennt, wodurch die gewünschte getrennte Höhenverstellbarkeit der Transferstation 14 und der Beladestation 16 gewährleistet ist.

Die schematische Seitenansicht der Fig. 1c verdeutlicht die an einer oberen Stirnseite der Hubwerkssäule 12 angeordneten separaten Antriebsmotoren 34, die der vertikalen Positionsverstellung der Transfer- und Beladestationen 14 und 16 dienen und zu diesem Zweck über geeignete Zugmittel, insbesondere durch Zugriemen 36 mit diesen verbunden sind, so dass eine exakt steuerbare Höhenverstellbarkeit der Transfer- und Beladestationen 14 und 16 gewährleistet ist. Die Hubwerkssäule 12 kann vorzugsweise mit ihrer unteren Stirnseite am Boden 38 einer Produktionsstätte oder einem Verpackungsstraßenbereich verankert sein. Wahlweise kann die Hubwerkssäule 12 auf einem zusätzlichen Podest, einem Sockel 40 o. dgl. stehen und dort verankert sein.

Die schematische Draufsicht der Fig. 1d lässt die funktionale und räumliche Trennung der unmittelbar nebeneinander angeordneten Transfer- und Beladestationen 14 und 16 deutlich erkennen, so dass es weder zu einer Kollision der Transfer- und Beladestationen 14 und 16 kommen kann, noch dass deren Vertikalbewegungen in irgendeiner Weise voneinander abhängig sind, außer die für einen Überladevorgang von Gebinden 20 erforderliche Niveaugleichheit der Auflageebenen der beiden Stationen 14 und 16. Die beiden Stationen 14 und 16, können mittels der Zugmittel bzw. Zugriemen 36 (vgl. Fig. 1c) gegen die Wirkung der Schwerkraft nach oben gezogen bzw. nach unten abgelassen werden. Um die erforderlichen Antriebsleistungen zur vertikalen Bewegung der Transfer- und Beladestationen 14 und 16 zu reduzieren, sind die Stationen 14 und 16 jeweils mit Gegengewichten 42 gekoppelt, die sich jeweils in gegensinniger Vertikalbewegung zu den sich aufwärts oder abwärts bewegenden Belade- bzw. Transferstationen 16 und 14 senken oder heben können. Auch die Gegengewichte 42 können wahlweise über entsprechende Zugmittel wie bspw. Zugriemen, Zugketten oder Zugseile mit den Antriebsmotoren 34 (vgl. Fig. 1c) bzw. mit den Belade- oder Transferstationen 16 und 14 verbunden sein. Im gezeigten Ausführungsbeispiel befinden sich die vertikal gegensinnig zu den Transfer- und Beladestationen 14 und 16 beweglichen Gegengewichte 42 an einer Rückseite der Hubwerkssäule 12, an einer den Stationen 14 und 16 gegenüber liegenden Seite.

Die schematische Teilansicht der Fig. 1b und die Draufsicht der Fig. 1d lassen den Aufbau der Führungseinrichtungen 30 erkennen, die jeweils durch L-förmige Träger- oder Rahmenelemente 44 gebildet sind, die jeweils eine Verbindung zwischen der Beladestation 16 bzw. der Transferstation 14 einerseits und der Stützstruktur bzw. der Hubwerkssäule 12 andererseits herstellen. Die L-förmigen Träger- oder Rahmenelemente 44 ermöglichen die vertikalen Bewegungen der beiden vertikal verstellbaren Belade- 14 und Transferstationen 16 und sorgen zudem für eine Begrenzung der Bewegungsmöglichkeiten innerhalb eines vorgegebenen Bewegungsraumes. Den Rahmenelementen 44 sind im gezeigten Ausführungsbeispiel jeweils drei Paare von Wälzlagern 46 zugeordnet, die in vertikaler Richtung entlang den Führungsschienen 32 an den Seiten bzw. an der Front der Hubwerkssäule 12 geführt sind.

Wie es die Fig. 1b verdeutlicht, ist jedem der beiden Stationen 14 und 16 ein separates L-förmiges Rahmenelement 44 zugeordnet, das insgesamt wenigstens drei Wälzlagerpaare 46 aufweist, so dass eine Vertikalführung an jeweils einem Führungsschienenpaar 32 ermöglicht ist. Jedes Wälzlagerpaar 46 weist wenigstens zwei Wälzlager 46 auf, die vertikal voneinander beabstandet sind und jeweils auf einer Führungsschiene 32 geführt sind bzw. dort abwälzen. Da das L-förmige Rahmenelement 44 insgesamt wenigstens drei solche Wälzlagerpaare 46 aufweist, kann es spielfrei geführt und festgelegt werden, denn wenigstens ein Wälzlagerpaar 46 ist der Frontseite der Hubwerkssäule 12 und wenigstens ein weiteres Wälzlagerpaar 46 der vertikalen Seitenfläche der Hubwerkssäule 12 zugeordnet, so dass die Hubwerkssäule 12 von wenigstens zwei Seiten umgriffen wird. An diesen beiden Rahmenelementen 44 sind jeweils die Transferstation 14 bzw. die Beladestation 16 verankert, wodurch die unabhängigen Vertikalbewegungen der beiden Stationen 14 und 16 ermöglicht sind.

Wie insbesondere die Figuren 1a und 1d erkennen lassen, sind die Vertikalführungseinrichtungen 30 in Gestalt der Rahmenelemente 44, an denen jeweils die Belade- bzw. Transferstationen 16 bzw. 14 fixiert sind, jeweils an gegenüber liegenden vertikalen Seitenflächen sowie an der vertikalen Frontseite der Hubwerkssäule 12 angeordnet, so dass die erste Auflageebene 26 der Transferstation 14 und die unmittelbar daneben angeordnete zweite Auflageebene 48 der Beladestation 16 jeweils nach vorne ragen, so dass die Auflageflächen bzw. Auflageebenen 26 und 48 der vertikal verstellbaren Belade- und Transferstationen 16 und 14 bei randseitig an der Zufördereinrichtung 18 stehenden Hubwerkssäule 12 jeweils einen Teil des Förderabschnittes zur Beförderung der Gebindelagen 20 bilden können, wenn diese in kompletten Lagen palettiert werden (vgl. Fig. 1c).

Um die auf der ersten Auflageebene 26 der Transferstation 14 befindliche, zu palettierende Lage mit Gebinden 20 in horizontaler Förderrichtung 22 auf die in gleicher Höhe befindliche zweite Auflageebene 48 der Beladestation 16 überschieben zu können, ist im gezeigten Ausführungsbeispiel die erste Auflageebene 26 der Transferstation 14 mit einem umlaufenden Fördermittel 50 ausgestattet, das insbesondere durch ein umlaufendes Band, eine Mattenkette o. dgl. gebildet sein kann, so dass das umlaufende Fördermittel 50 für einen schnellen und erschütterungsfreien Transport der zu palettierenden Gebindelage 20 zur nachgeordneten Beladestation 16 sorgen kann. Die Beladestation 16 kann zudem mit einer zweigeteilten Bodenfläche 52 ausgestattet sein, wobei die der Transferstation 14 zugewandte erste Bodenflächenhälfte 54 vorzugsweise nach unten, unterhalb der zweiten Auflageebene 48 gefahren werden kann, so dass sie die Überführungsbewegung der Gebindelage 20 nicht behindern kann.

Die zweite Bodenflächenhälfte 56 der quer zur Förderrichtung 22 geteilten Bodenfläche 52 der Beladestation 16 kann wahlweise gemäß Fig. 1c nach oben, über die Auflageebene 48 geöffnet werden. Um diese Öffnungsbewegungen der Bodenfläche 52 zur Abgabe der darauf stehenden Gebindelage 20 nach unten auf den Stapelplatz 28 zu ermöglichen, kann die Beladestation 16 vorzugsweise als sog. Jalousiekopf ausgebildet sein, der eine zweigeteilte Bodenfläche 52 mit rotierenden Auflagestäben aufweist. In diesem Fall bietet die Bewegungsmöglichkeit der zweigeteilten Bodenfläche 52 den Vorteil, dass bereits mit dem Schließen der Jalousie eine weitere Gebindelage 20 von der Transferstation 14 in die Beladestation 16 übergeben werden kann, nachdem eine vorhergehende Gebindelage 20 auf dem Stapelplatz 28 abgelegt wurde.

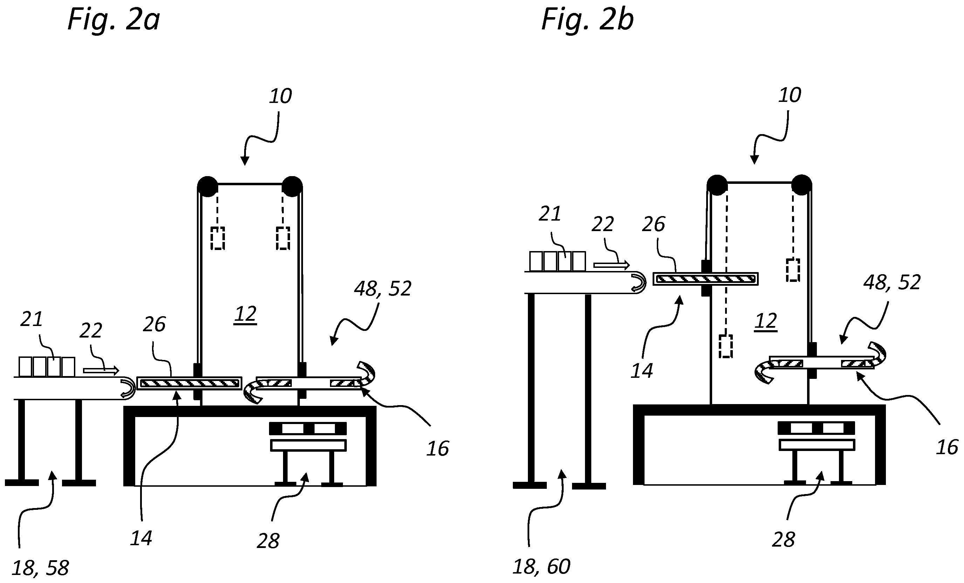

Die beiden schematischen Seitenansichten der Fig. 2 verdeutlichen die universelle Einsetzbarkeit der erfindungsgemäßen Palettiervorrichtung 10, die sich sowohl für einen sog. unteren Zulauf 58 der Zufördereinrichtung 18 (Fig. 2a) als auch für einen sog. oberen Zulauf 60 der Zufördereinrichtung 18 (Fig. 2b) eignet. Mit unterem Zulauf 58 ist in diesem Zusammenhang ein Höhenniveau der Zufördereinrichtung 18 gemeint, das ungefähr im Bereich des Höhenniveaus des noch nicht mit Gebindelagen beaufschlagten Stapelplatzes 28 liegt. Mit oberem Zulauf 60 ist dementsprechend ein Höhenniveau der Zufördereinrichtung 18 gemeint, das deutlich oberhalb des Höhenniveaus des noch nicht mit Gebindelagen 21 beaufschlagten Stapelplatzes 28 liegt. D.h., bei dem unteren Zulauf 58 befinden sich normalerweise die untere Vertikalposition der Transferstation 14 und das Förderniveau der Zufördereinrichtung 18 auf einem einheitlichen Höhenniveau, während es beim oberen Zulauf 60 erforderlich sein kann, dass die obere Vertikalposition der Transferstation 14 oberhalb des Förderniveaus der Zufördereinrichtung 18 liegt, da ein palettierter Stapel auf dem Stapelplatz 28 durchaus höher sein kann als das Höhenniveau der Zufördereinrichtung 18. In einem solchen Fall ist es erforderlich, dass die Beladestation 16, die ihre Gebindelagen 21 durch Öffnen der zweigeteilten Bodenfläche 52 nach unten abgibt, relativ hoch gehoben werden muss. Da der Überschub der Gebindelage 21 zwischen der Transferstation 14 und der Beladestation 16 auf einheitlichem Höhenniveau zu erfolgen hat, muss somit auch die Transferstation 14 einen ausreichend weiten vertikalen Verstellbereich aufweisen.

Während bei der Darstellung der Fig. 2a eine Gebindelage 21 auf der Zufördereinrichtung 18 liegt und in Förderrichtung 22 auf die in gleichem Höhenniveau befindliche Transferstation 14 und anschließend auf die damit fluchtende Beladestation 16 überschoben wird, befinden sich die Transfer- und Beladestationen 14 und 16 in der Darstellung der Fig. 2b in unterschiedlichen Höhenniveaus. So steht auf dem oberen Zulauf 60 der Zufördereinrichtung 18 eine Gebindelage 21 zum Überschub auf die entsprechend positionierte Transferstation 14 bereit. Die deutlich tiefer angeordnete Beladestation 16 kann bereits eine Gebindelage 21 auf dem Stapelplatz 28 abgelegt haben und nach oben bewegt werden, während die Transferstation 14 in Gegenrichtung nach unten bewegt werden kann. Sobald die beiden Stationen 14 und 16 dasselbe Höhenniveau erreicht haben, so dass ihre Auflageebenen 26 und 48 miteinander fluchten, kann die auf der Transferstation 14 befindliche Gebindelage 21 durch Aktivierung des umlaufenden Fördermittels 50 (vgl. Fig. 1d) der Beladestation 14 auf die geschlossene Bodenfläche 52 der Beladestation 16 überführt werden. Wahlweise kann dieser Überschubvorgang auch bei synchron in vertikaler Richtung bewegten Transfer- und Beladestationen 14 und 16 erfolgen, bspw. bei sich gleichzeitig in Richtung zum Stapelplatz 28 absenkenden Transfer- und Beladestationen 14 und 16. Sobald die Gebindelage 21 vollständig auf die Beladestation 16 überführt ist, kann die Synchronbewegung enden bzw. kann die Transferstation 14 wieder in Richtung zur Zufördereinrichtung 18 angehoben oder abgesenkt werden, wo eine weitere Gebindelage 21 übernommen werden kann.

Zusammenfassend liefert die erfindungsgemäße Palettiervorrichtung 10 den besonderen Vorteil, dass trotz Verwendung einer einzigen gemeinsamen Tragstruktur - dies kann insbesondere die vertikal ausgerichtete Hubwerkssäule 12 sein - und trotz einer Anordnung der Transferstation 14 und der Beladestation 16 in unmittelbarer Nähe nebeneinander eine völlig unabhängige Vertikalbewegung der beiden Stationen 14 und 16 ermöglicht ist. Diese unabhängigen Bewegungsmöglichkeiten werden im Wesentlichen dadurch erreicht, dass die Führungselemente 30 für die vertikale Bewegungsführung der beiden Stationen 14 und 16 jeweils separat und damit sowohl funktional als auch baulich getrennt voneinander ausgeführt sind. Die Führungselemente 30 können zwar an gegenüber liegenden Längsseiten derselben Hubwerkssäule 12 und damit in unmittelbarer baulicher Nähe zueinander angeordnet sein, bleiben aber dennoch baulich getrennt sowie auch in ihren Bewegungsführungen und auch antriebsseitig getrennt voneinander.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Palettiervorrichtung
- 12: Hubwerkssäule
- 14: Transferstation
- 16: Beladestation
- 18: Zufördereinrichtung
- 20: Gebinde, Gebindelage
- 21: Gebindelage
- 22: Förderrichtung
- 24: Horizontalfördereinrichtung
- 26: erste Auflageebene
- 28: Stapelplatz
- 30: Führungseinrichtung, Vertikalführungseinrichtung
- 32: Führungsschiene
- 34: Antriebsmotor
- 36: Zugriemen, Riemenabschnitte
- 38: Boden
- 40: Sockel
- 42: Gegengewicht
- 44: Rahmenelement, Trägerelement
- 46: Wälzlager, Wälzlagerpaar
- 48: zweite Auflageebene
- 50: umlaufendes Fördermittel, Endlosfördermittel
- 52: zweigeteilte Bodenfläche, teilbare Bodenfläche
- 54: erste Bodenflächenhälfte
- 56: zweite Bodenflächenhälfte
- 58: unterer Zulauf
- 60: oberer Zulauf

## Patentansprüche

1. Palettiervorrichtung (10) mit einer vertikal beweglichen Transferstation (14) und mit einer der Transferstation (14) in Förderrichtung (22) nachgeordneten, vertikal beweglichen Beladestation (16), die mit einem Stapelplatz (28) zur Palettierung der Artikel, Stückgüter und/oder Gebinde (20) in Förderverbindung steht und/oder dem Stapelplatz (28) räumlich zugeordnet ist, wobei die nebeneinander angeordneten und unabhängig voneinander in ihren vertikalen Positionen verstellbaren Transfer- (14) und Beladestationen (16) einer gemeinsamen, ortsfesten Tragstruktur zugeordnet sind, die jeweils separate Führungseinrichtungen (30) zur vertikal beweglichen Führung und Antriebseinrichtungen zur vertikalen Positionsverstellung der Transfer-(14) und Beladestationen (16) aufweist, wobei die Tragstruktur durch eine Säule mit im Wesentlichen vertikaler Längserstreckung, insbesondere durch eine Hubwerkssäule (12) gebildet ist, bei der die Beladestation (16) und die Transferstation (14) jeweils frontseitig nebeneinander angeordnet sind, wobei die Transferstation (14) und die Beladestation (16) jeweils eine Auflageebene (26, 48) für die zu transportierenden und zu palettierenden Artikel, Stückgüter und/oder Gebinde (20) aufweisen, welche unmittelbar nebeneinander anordbar sind, so dass die beiden Stationen (14, 16) in einer variabel nutzbaren Förderverbindung miteinander stehen, **dadurch gekennzeichnet, dass** die separaten Führungseinrichtungen (30) räumlich und funktional voneinander getrennt sind, so dass die Transferstation (14) in ihren Hebe- oder Senkbewegungen oberhalb oder unterhalb des Höhenniveaus der zumindest temporär stillstehenden oder sich vertikal bewegenden Beladestation (16) positionierbar ist.

2. Palettiervorrichtung (10) nach Anspruch 1, bei der den nebeneinander angeordneten Transfer- und Beladestationen (14, 16) jeweils gegenüberliegend an der Tragstruktur angeordnete Vertikalführungen und/oder Führungseinrichtungen (30) für die Vertikalbewegungen der Transfer- und Beladestationen (14, 16) zugeordnet sind.

3. Palettiervorrichtung nach Anspruch 2, bei der die nebeneinander an der Tragstruktur bzw. der Hubwerkssäule (12) angeordneten Transfer- und Beladestationen (14, 16) in Förder- bzw. Materialflussrichtung der in Richtung zum Stapelplatz (28) beförderten Artikel, Stückgüter und/oder Gebinde (20) hintereinander und/oder in Reihe angeordnet sind.

4. Palettiervorrichtung nach einem der Ansprüche 1 bis 3, bei der die Tragstruktur bzw.
Hubwerkssäule (12) jeweils separate Antriebsmotoren (34) für die Beladestation (16) und die Transferstation (14) sowie jeweils Verbindungselemente zum Heben und Senken, insbesondere Seil-, Ketten-, oder Riemenabschnitte (36) aufweist.

5. Palettiervorrichtung nach einem der Ansprüche 1 bis 4, bei der die Führungseinrichtungen (30) jeweils durch wälz- und/oder gleitgelagerte Vertikalführungs- oder Rahmenelemente (44) gebildet sind, die an Führungsschienen (32) und/oder -flächen an gegenüber liegenden Längsseiten der Tragstruktur bzw. Hubwerkssäule (12) geführt sind.

6. Palettiervorrichtung nach Anspruch 5, bei dem die Vertikalführungs- oder Rahmenelemente (44) durch vertikal verstellbare Schlittenelemente gebildet sind, an denen jeweils die Beladestation (16) bzw. die Transferstation (14) fixiert sind.

7. Palettiervorrichtung nach Anspruch 5 oder 6, bei der jedes der Vertikalführungselemente jeweils mindestens drei Gleit- und/oder Wälzlagerführungen (46) umfasst, die eine parallel zur vertikalen Längserstreckungsrichtung der Tragstruktur bzw. Hubwerkssäule (12) verlaufende Führungsschiene (32) zumindest von zwei Seiten umgreifen.

8. Palettiervorrichtung nach einem der Ansprüche 1 bis 7, bei der einer Auflageebene (26) der Transferstation (14) eine Horizontalfördereinrichtung, insbesondere ein umlaufendes Endlosfördermittel (50) zugeordnet ist.

9. Palettiervorrichtung nach einem der Ansprüche 1 bis 8, bei der eine Auflageebene (48) der Beladestation (16) eine entfernbare und/oder teilbare Bodenfläche (52) aufweist.

10. Verfahren zur Handhabung einer Palettiervorrichtung (10) gemäß einem der Ansprüche 1 bis 9, wobei die Transferstation (14) mit einer vorgeordneten Zufördereinrichtung (18) zur Beförderung von zu palettierenden Artikeln, Stückgütern, Gebinden (20) o. dgl. in Förderverbindung steht, und wobei die Beladestation (16) mit einem Stapelplatz (28) zur Palettierung der Artikel, Stückgüter und/oder Gebinde (20) in Förderverbindung steht, und wobei Auflageebenen (26, 48) der Transfer- (14) und Beladestationen (16) zumindest während eines Überschubs einer Artikel-, Stückgut- und/oder Gebindelage (21) zwischen den beiden Stationen (14, 16) annähernd miteinander fluchten, **dadurch gekennzeichnet, dass** die Transferstation (14) in ihren Hebe- oder Senkbewegungen oberhalb oder unterhalb des Höhenniveaus der zumindest temporär stillstehenden oder sich vertikal bewegenden Beladestation (16) positionierbar ist.

11. Verfahren nach Anspruch 10, bei dem die Transfer- und Beladestationen (14, 16) zumindest während einer Phase eines Überschubs einer Artikel-, Stückgut- und/oder Gebindelage (21) zwischen den beiden Stationen (14, 16) jeweils synchrone Vertikalbewegungen ausführen.

## Claims

1. A palletising apparatus (10) with a vertically movable transfer station (14) and with a vertically movable loading station (16) disposed downstream of the transfer station (14) in conveying direction (22), which loading station (16) is in conveying communication with a stacking location (28) for palletising articles, piece goods, and/or bundles (20) and/or which is spatially associated with the stacking location (28), wherein the adjacently arranged transfer stations (14) and loading stations (16), which are adjustable independently of one another in their vertical positions, are associated with a common, stationary support structure that has in each case separate guiding devices (30) for the vertically movable guiding, and drive devices for the vertical position adjustment of the transfer stations (14) and loading stations (16), wherein the support structure is formed by a column with a substantially vertical longitudinal extension, in particular by a lifting column (12), where the loading station (16) and the transfer station (14) are in each case arranged adjacent to each other at the front side, wherein the transfer station (14) and the loading station (16) each have a support surface (26, 48) for the articles, piece goods, and/or bundles (20) to be transported and to be palletised, with the support surfaces (26, 48) being arrangeable immediately next to each other so that the two stations (14, 16) are in a variably usable conveying communication with each other, **characterised in that** the separate guiding devices (30) are spatially and functionally separate from each other so that the transfer station (14) is positionable in its lifting movements or lowering movements above or below the height level of the at least temporarily stationary or vertically moving loading station (16).

2. The palletising apparatus (10) as recited in claim 1 in which the adjacently arranged transfer stations and loading stations (14, 16) are associated with vertical guidings and/or guiding devices (30), in each case disposed oppositely located at the support structure, for the vertical movements of said transfer stations and loading stations (14, 16).

3. The palletising apparatus as recited in claim 2 in which the transfer stations and loading stations (14, 16) arranged adjacent to each other at the support structure or, as the case may be, at the lifting column (12), are disposed one after another and/or in a row in conveying direction or, as the case may be, in the direction of the material flow of the articles, piece goods, and/or bundles (20) being conveyed toward the stacking location (28).

4. The palletising apparatus as recited in one of the claims 1 to 3 in which the support structure or, as the case may be, the lifting column (12) has in each case separate drive motors (34) for the loading station (16) and for the transfer station (14) and also in each case connecting elements, in particular, cord sections, chain sections, or belt sections (36) for the purpose of lifting and lowering.

5. The palletising apparatus as recited in one of the claims 1 to 4 in which the guiding devices (30) are in each case formed by anti-friction bearing mounted and/or friction bearing mounted vertical guiding elements or frame elements (44), which are guided at guide rails (32) and/or guide surfaces at oppositely located longitudinal sides of the support structure or, as the case may be, of the lifting column (12).

6. The palletising apparatus as recited in claim 5 in which the vertical guiding elements or frame elements (44) are formed by vertically adjustable slide elements to which in each case the loading station (16) or, as the case may be, the transfer station (14) are fastened.

7. The palletising apparatus as recited in claim 5 or 6 in which each of the vertical guiding elements comprises in each case at least three friction bearing guidings and/or anti-friction bearing guidings (46), which at least from two sides encompass a guide rail (32) running parallel to the vertical longitudinal extension direction of the support structure or, as the case may be, of the lifting column (12).

8. The palletising apparatus as recited in one of the claims 1 to 7 in which a support surface (26) of the transfer station (14) has a horizontal conveying device, in particular, a circulating endless conveying means (50) associated with it.

9. The palletising apparatus as recited in one of the claims 1 to 8 in which a support surface (48) of the loading station (16) has a removable and/or separable base surface (52).

10. A method for handling a palletising apparatus (10) as recited in one of the claims 1 to 9, wherein the transfer station (14) is in conveying communication with an upstream feeding device (18) for conveying articles, piece goods, bundles (20) or the like to be palletised, and wherein the loading station (16) is in conveying communication with a stacking location (28) for palletising the articles, piece goods, and/or bundles (20), and wherein the support surfaces (26, 48) of the transfer stations (14) and loading stations (16) are approximately aligned with each other at least during a transfer of a layer (21) of articles, piece goods, and/or bundles between the two stations (14, 16), **characterised in that** the transfer station (14) is positionable in its lifting movements or lowering movements above or below the height level of the at least temporarily stationary or vertically moving loading station (16).

11. The method as recited in claim 10 in which the transfer stations and loading stations (14, 16) carry out in each case synchronous vertical movements at least during a phase of a transfer of a layer (21) of articles, piece goods, and/or bundles between the two stations (14, 16).

## Revendications

1. Dispositif de palettisation (10) doté d'une station de transfert (14) mobile dans le sens vertical et, disposée après la station de transfert (14) dans le sens de transport (22) et mobile dans le sens vertical, d'une station de chargement (16) qui est reliée en termes de transport à une place d'empilement (28) pour la palettisation des articles, produits de détail et/ou packs (20) et/ou est associée dans l'espace à ladite place d'empilement (28), les stations de transfert (14) et de chargement (16), qui sont agencées l'une à côté de l'autre et réglables dans leur position verticale respective indépendamment l'une de l'autre, étant associées à une structure porteuse commune et fixe qui présente des dispositifs de guidage (30) pour le guidage dans le sens de déplacement vertical et des dispositifs d'entraînement, chacun séparés, pour le changement de position verticale des stations de transfert (14) et de chargement (16), la structure porteuse étant formée par une colonne s'étendant dans sa longueur sensiblement dans le sens vertical, notamment par une colonne de dispositif de levage (12), dans lequel la station de chargement (16) et la station de transfert (14) sont chacune agencées à l'avant l'une à côté de l'autre, la station de transfert (14) et la station de chargement (16) présentant chacune une surface portante (26, 48) pour les articles, produits de détail et/ou packs (20) à transporter et à palettiser, lesquelles peuvent être disposées directement à côté l'une de l'autre de telle sorte que les deux stations (14, 16) sont reliées l'une à l'autre en termes de transport utilisable de manière variable, **caractérisé en ce que** les dispositifs de guidage séparés (30) sont séparés l'un de l'autre dans l'espace et dans leur fonction, de telle sorte que la station de transfert (14) peut être positionnée dans ses mouvements de soulèvement ou d'abaissement en dessus ou en dessous du niveau de hauteur de la station de chargement (16) se trouvant au moins temporairement à l'arrêt ou en cours de mouvement vertical.

2. Dispositif de palettisation (10) selon la revendication 1, dans lequel sont associés aux stations de transfert et de chargement (14, 16) agencées l'une à côté de l'autre, des guidages verticaux et/ou dispositifs de guidage (30), tous les deux agencés de l'autre côté sur la structure porteuse, pour les mouvements verticaux des stations de transfert et de chargement (14, 16).

3. Dispositif de palettisation selon la revendication 2, dans lequel les stations de transfert et de chargement (14, 16), agencées l'une à côté de l'autre sur la structure porteuse ou colonne de dispositif de levage (12), sont agencées, dans le sens de transport ou de flux de matériel des articles, produits de détail et/ou packs (20) transportés vers la place d'empilement (28), l'une derrière l'autre et/ou en ligne.

4. Dispositif de palettisation selon l'une des revendications 1 à 3, dans lequel la structure porteuse ou colonne de dispositif de levage (12) présente des moteurs d'entraînement (34) séparés pour la station de chargement (16) et la station de transfert (14) ainsi que des éléments de liaison respectifs destinés au soulèvement et à l'abaissement, notamment des parties en corde, chaîne ou courroie.

5. Dispositif de palettisation selon l'une des revendications 1 à 4, dans lequel les dispositifs de guidage (30) sont chacun formés par des éléments de guidage vertical ou de cadre (44) montés sur roulement et/ou à palier lisse, lesquels sont guidés sur des rails de guidage (32) et/ou surfaces de guidage sur les côtés longitudinaux opposés de la structure porteuse ou de la colonne du dispositif de levage (12).

6. Dispositif de palettisation selon la revendication 5, dans lequel les éléments de guidage vertical ou de cadre (44) sont formés par des chariots réglables dans le sens vertical, sur lesquels sont respectivement fixées la station de chargement (16) et la station de transfert (14).

7. Dispositif de palettisation selon la revendication 5 ou 6, dans lequel chacun des éléments de guidage vertical comprend au moins trois guidages à palier lisse et/ou montés sur roulement (46) qui flanquent au moins sur deux côtés un rail de guidage (32) parallèle à la longueur, s'étendant dans le sens vertical, de la structure porteuse ou colonne du dispositif de levage (12).

8. Dispositif de palettisation selon l'une des revendications 1 à 7, dans lequel un dispositif de transport horizontal, notamment un moyen de transport sans fin et tournant (50), est associé à une surface portante (26) de la station de transfert (14).

9. Dispositif de palettisation selon l'une des revendications 1 à 8, dans lequel une surface portante (48) de la station de chargement (16) présente une surface au sol (52) qui peut être retirée et/ou divisée.

10. Procédé de manipulation d'un dispositif de palettisation (10) selon l'une des revendications 1 à 9, la station de transfert (14) étant reliée en termes de transport à un dispositif d'alimentation (18) placé en amont et destiné au transport d'articles, produits de détail, packs (20) ou équivalent à palettiser, et la station de chargement (16) étant reliée en termes de transport à une place d'empilement (28) pour la palettisation des articles, produits de détail et/ou packs (20), et des surfaces portantes (26, 48) des stations de transfert (14) et de chargement (16) étant approximativement dans l'alignement l'une de l'autre au moins pendant le transfert d'une position d'articles, produits de détail et/ou packs (21) entre les deux stations (14, 16), **caractérisé en ce que** la station de transfert (14) peut être positionnée dans ses mouvements de soulèvement ou d'abaissement en dessus ou en dessous du niveau de hauteur de la station de chargement (16) se trouvant au moins temporairement à l'arrêt ou en cours de mouvement vertical.

11. Procédé selon la revendication 10, dans lequel les stations de transfert et de chargement (14, 16) réalisent chacune des mouvements verticaux synchrones, au moins pendant une phase de transfert d'une position d'articles, produits de détail et/ou packs (21) entre les deux stations (14, 16).
